# EUROPÄISCHE PATENTANMELDUNG

(11) **EP 0 825 755 A2**
(43) Veröffentlichungstag der Anmeldung: **25.02.1998**
(21) Anmeldenummer: 97113596.7
(22) Anmeldetag: 06.08.1997
(51) Int. Cl.: H04N 1/00, H04N 1/32

(54) **Kommunikationssystem an das ein Faksimile-Endgerät angeschlossen ist**

(30) Priorität: 23.08.1996 DE 19634131
(71) Anmelder: SIEMENS AKTIENGESELLSCHAFT, 80333 München (DE)
(72) Erfinder: Krug, Wilfried, Dr. rer. nat., 58452 Witten (DE)

(57) **Zusammenfassung**

Systemintern ermittelte Informationen werden in ein Faksimile-Format umgesetzt und es wird zum geeigneten Zeitpunkt eine Verbindung zu dem sowieso vorhandenen Faksimile-Endgerät hergestellt. Auf diese Weise können Gesprächs- und/oder Gebührendaten bzw. Systemdaten zusätzlich neben den originären Faksimile-Informationen ausgedruckt werden. Diese zusätzlich auszudruckenden Dateninformationen werden vor der Übermittlung an das vorhandene Faksimile Gerät von der Systemsoftware in faxdruckbare Zeichen in einer bestimmten Seitenformatierung aufbereitet. Durch die vorgenommene faksimile-gerechte Darstellung kann auf einen dafür vorzusehenden separaten Drucker verzichtet werden.

## Beschreibung

Die Erfindung betrifft ein Kommunikationssystem gemäß den Merkmalen des Oberbegriffes des Anspruches 1.

Über die Teilnehmeranschlußschaltungen eines solchen Kommunikationssystem sind Endgeräte unterschiedlicher Kommunikationsart und/oder unterschiedlicher Leistungsmerkmale angeschlossen. Den Kommunikationsarten sind jeweils entsprechende Kommunikationsarten Sub-Systeme zugeordnet. In dem als Zentraleinrichtung des Kommunikationssystems dienenden Prozessor-System sind z. B. als eine periphere Einrichtung ein Sub-System für Faksimile oder für die notwendige Gebühren- bzw. Gesprächsdatenermittlung vorhanden. Deren Anzahl und Art wird je nach Einsatz des Kommunikationssystems konfiguriert. Die Kommunikation zwischen der Zentraleinrichtung und den peripheren Einrichtungen erfolgt über entsprechende Schnittstellen, die insbesondere Datenleitungen zum Lesen und Schreiben und Leitungen zur Meldungssignalisierung umfassen. Es wird also in einem solchen Kommunikationssystem den Teilnehmern ermöglicht beispielsweise auch neben einer Fernsprechverbindung eine Faksimile-Verbindung zu benutzen.

Es ist auch bekannt, an eine Administrationsschnittstelle des Telekommunikationssystems einen Drucker anzuschließen, der den Ausdruck beispielsweise von Gesprächs- und Gebührendaten ermöglicht. Die Auslastung eines solchen Drucker, insbesondere bei kleinen und mittleren Kommunikationssystemen ist gering. Eine andere bekannte Möglichkeit besteht darin, einen Personalcomputer ständig an das System anzuschließen. Neben einer anderweitigen Nutzung kann ein solcher Personalcomputer zur Bearbeitung und Rechnungserstellung anhand der angefallenen Gebührendaten eingesetzt werden. Grundsätzliche ist eine derartige Lösung für den Einsatz in einer Hotelrezeption interessant. Die Benutzung eines auch anderweitig eingesetzten Personalcomputers in der Art und Weise einer solchen Hotellösung ist mit zusätzlicher Komplexität und somit Nachteilen verbunden. Im allgemeinen laufen auf einem solchen Personalcomputer viele unterschiedliche, zum Teil instabile Computerprogramme. Durch sie und durch Fehlbedienungen kann es zu Datenverlusten, beispielsweise bei den erfaßten Gesprächsdaten, kommen.

Es ist die Aufgabe der Erfindung ein Kommunikationssystem unter Beibehaltung der gebotenen Leistungsmerkmale im Hinblick auf die Endgerätebestückung kostengünstiger zu gestalten.

Die Lösung dieser Aufgabe erfolgt erfindungsgemäß mit den Merkmalen des kennzeichnenden Teils des Anspruches 1.

Das wesentliche der Erfindung besteht darin, daß eine als Sende-Empfangsstation eines Faksimile-Netzes, dienendes Faksimile-Gerät über diesen originären Einsatz hinaus zusätzlich für den Empfang und für den Ausdruck anderer systemintern bereitgestellten Dateninformationen dient. Diese geschieht unabhängig vom eigentlichen Faksimile-Netz, das ein übliches Fernsprechnetz sein kann. Diese auszudruckenden Dateninformationen werden durch die Systemsteuerung im Zusammenhang mit dem Betrieb des System oder mit einer andersartigen Kommunikationsverbindung ermittelt und anschließend in ein Faksimile-Format umgesetzt. Zum geeigneten Zeitpunkt, beispielsweise auf Anforderung oder mit Erreichen einer vorprogrammierten Situation wird durch die Systemsteuerung eine Verbindung zum Faksimile-Gerät aufgebaut und falls dieses frei ist, diese systemseitig bereitgestellten Dateninformationen zu diesem übertragen und dort gleichfalls ausgedruckt. Dies gilt sowohl für digital angesteuerte ISDN-Faksimile-Geräte als auch für die damit kompatiblen anlogen Faksimile-Endgeräte. Bei Anwendung von Faksimile-Geräten der letztgenannten Gruppe werden die systemintern ermittelten und in Faksimile-Format umgesetzten Dateninformationen einem Faksimile-Modem zugeführt, das daraus unter anderem bestimmungsgemäß die zur Übertragung an das Faksimile-Gerät bestimmten leitungscodierten Informationen bildet. Die ermittelten Dateninformationen werden also in einem speziellen Protokoll, das auch eine bestimmte Seitenformatierung der Faksimile-Seite beinhaltet, für den Ausdruck am Faksimile-Endgerät erstellt. Für diese zusätzlichen Ausdrucke ist das Faksimile-Endgerät während des Tagesablaufes nur für eine kurze Zeit belegt. Durch diese zusätzliche Mitbenutzung entfällt also der ansonsten separat bereitzustellende Drucker. Insbesondere in kleinen und mittleren Telekommunikationsanlagen ist ein solcher Drucker nur äußerst gering ausgelastet. Seine Aufgabe wird also erfindungsgemäß von dem bereits an eine Kommunikationsanlage angeschlossenen Faksimile-Endgerät miterfüllt, so daß sich eine entsprechende Kosteneinsparung ergibt. Die notwendigen programmtechnischen Änderungen fallen kaum ins Gewicht. Grundsätzlich kann das eingesetzte Faksimile-Modem für die Ansteuerung der analogen Faksimile-Endgeräte als eine an das Kommunikationssystem anzuschließende eigenständige Einheit ausgebildet sein. Sie wird über eine in der Regel im System vorgeleistete Administrationsschnittstelle, z. B. in Form einer standardisierten V24-Schnittstelle als auch über eine Teilenhmerleitungsschnittstelle angeschlossen. Es kann auch vorgesehen werden, daß sämtliche notwendigen Komponenten im Kommunikationssystem selbst integriert sind und somit nur die für das Faksimile-Endgerät sowieso beanspruchte Teilnehmerschnittstelle bereitgestellt werden muß.

Erfindungsgemäß können die auf dem bereits vorhandenen Faksimile-Gerät zusätzlich auszudruckenden Dateninformationen unterschiedlichster Art sein. Sie können beispielsweise die bei einer kostenpflichtigen Kommunikationsverbindung anfallenden Gesprächsdaten und/oder die Gebührendaten darstellen. Diese werden durch die Systemsteuerung vermittels eines entsprechend ausgebildeten Moduls erfaßt und sie können nach den unterschiedlichsten Gesichtspunkten in bekannter Weise aufgeschlüsselt und entsprechend ausgedruckt werden. Für den Ausdruck auf dem bereits vorhandenen Faksimile-Endgerät können durch die Systemsteuerung auch Systemdaten erfaßt und in eine faksimilegerechte Darstellung umgesetzt werden. Diese Systemdaten können beispielsweise für das Servicepersonal des Kommunikationssystems bestimmte Konfiguratlonsdaten, im wesentlichen also die Kunden-Daten sein. Solche Systemdaten können auch statistische Auswertungen betreffen. Sie können beispielsweise die Ergebnisse von Fehlerzählungen und von Stabilitätsüberwachungen darstellen.

Die Erfindung wird im folgenden anhand zweier Blockschaltbilder näher erläutert.

Die Blockschaltbilder enthalten grundsätzlich nur einige der funktionswesentlichen Komponenten bzw. Module.

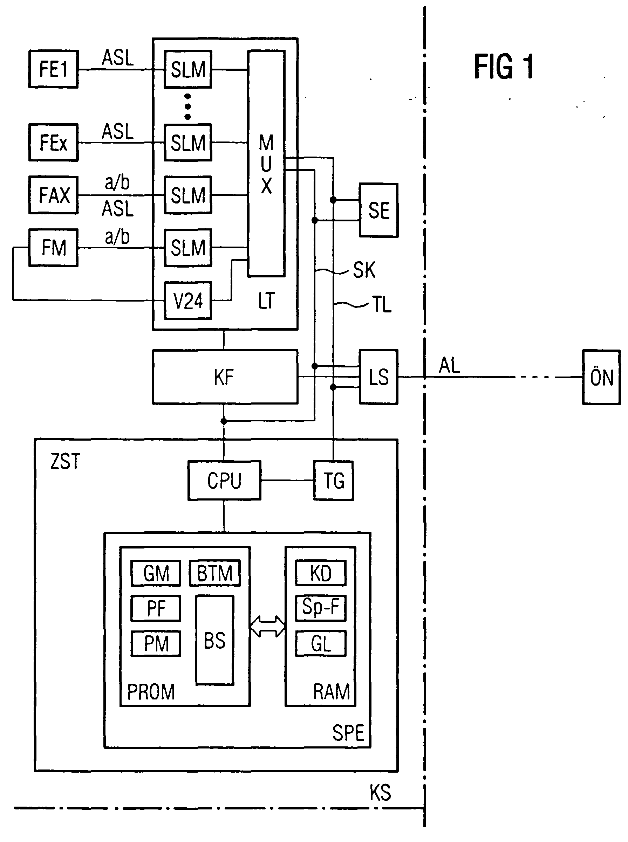

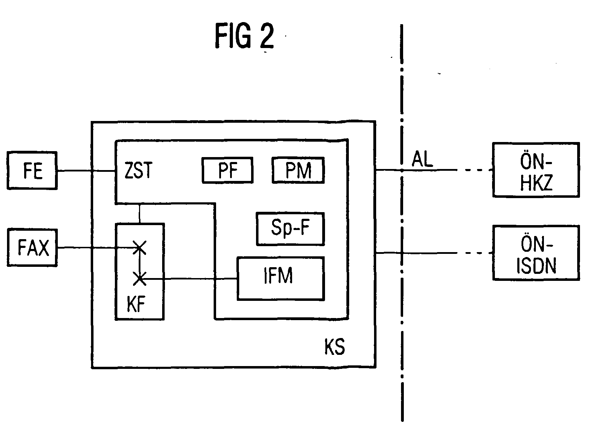

Die FIG 1 zeigt eine typische Konfiguration eines Kommunikationssystems, das ein sogenanntes kleines oder mittleres Konfigurationssystem darstellen soll, mit Endgeräten, von denen einige Fernsprechendgeräte und mindestens ein weiteres ein Faksimile-Endgerät darstellt. In der FIG 1 sind zur erfindungsgemäßen Lösung extern angeschaltete Einheiten vorhanden, während
bei der FIG 2, die ein stark reduziertes Blockschaltbild zeigt, die zur Lösung der Erfindung vorzusehenden Komponenten vollständig im Kommunikationssystem integriert sind.

Das in den Figuren dargestellte Kommunikationssystem ist insbesondere ein kleines bis mittleres Kommunikationssystem mit Fernsprechendgeräten FE1 bis Fex und mindestens einem Faksimile-Endgerät FAX. Diese Endgeräte sind nur beispielhaft dargestellt. Zentraler Bestandteil des Kommunikationssytems KS ist ein zentrales Koppelfeld KF, über das die Endgeräte miteinander bzw. mit zu einem öffentlichen Kommunikationssystem ÖN führenden Leitungen AL verbindbar sind. Dieses Koppelfeld steht unter dem Steuereinfluß einer zentralen Systemsteuerung ZST, die neben dem Zentralprozessor CPU eine Speichereinrichtung SPE und eine Takteinheit TG enthält. Der Zentralprozessor steuert sämtliche Vermittlungsvorgänge und besorgt eine Aufbereitung und Zuteilung der Steuerdaten, wozu ihm ein entsprechendes Steuerprogramm zugeordnet ist. Diese Aufgaben können grundsätzlich auch auf mehrere Prozessoren aufgeteilt werden.

Im Kommunikationssystem KS sind Leitungsanschlußeinrichtungen, symbolisiert durch die Leitungsanschlußeinrichtung LT angeordnet. Diese enthalten jeweils Teilnehmeranschlußmodule SLM. Diese sind über Teilnehmeranschlußleitungen ASL jeweils mit den Endgeräten verbunden. Es können grundsätzlich unterschiedliche Teilnehmeranschlußmodule vorgesehen sein. Dies sind zum einen Teilnehmeranschlußmodule für den Anschluß analoger Kommunikationsendgeräte und zum anderen auch Teilnehmeranschlußmodule für den Anschluß unterschiedlich strukturierter digitaler Kommunikationsendgeräte. Die von den Endgeräten ermittelten bzw. ihnen zugeführten Informationen werden über eine Multiplexeinrichtung MUX über das Koppelfeld KF geleitet. Vermittlungstechnisch gesteuert werden die einzelnen Leitungseinrichtungen, denen jeweils eine Mehrzahl von Endgeräten zugeordnet ist, von der zentralen Systemsteuerung ZST. Es ist jede Leitungsanschlußeinrichtung über einen Signalisierungskanal SK mit der Systemsteuerung verbunden. Über diesen Signalisierungskanal werden die Informationen z.B. mit Hilfe der bekannten HDLC-Übermittlungsprozedur ausgetauscht. Die in der Systemsteuerung gebildeten Taktsignale werden über eine Taktleitung TL an die Leitungsanschlußeinrichtungen LT verteilt. Mit der Einheit TG ist angedeutet, daß durch diese Taktsignale zur Verfügung gestellt werden. Neben Fernsprechverbindungen sind Faksimileverbindungen zwischen internen Faksimileendgeräten und auch mit einem externen Faksimilegerät über das Koppelfeld, die Leitungsschnitttstelle LS und die zugehörige Amtsleitung AL herstellbar. Die angeschlossenen Faksimileendgeräte können analoge Endgeräte und/oder ISDN-Faksimileendgeräte darstellen. Das in der Figur beispielhaft gezeigte Faksimileendgerät FAX soll ein analoges Faksimileendgerät sein. Als solches kann es auch Faksimileinformationen eines ISDN-Gerätes empfangen und von ihm ausgehende Faksimilenachrichten können auch von einem ISDN-Faksimilegerät verarbeitet werden. Die Peripherie des Kommunikationssystems wird ergänzt durch eine Signalisierungseinheit SE, die zur Zeichenversorgung des Systems dient.

Der zentrale Prozessor CPU der Systemsteuerung hat Zugriff zu den in der Speichereinrichtung SPE abgelegten Daten. Sie besteht grundsätzlich aus den Speicherteilen PROM und RAM. Im Programmspeicherteil PROM ist das Anlagenbetriebsprogramm, angedeutet durch das Modul BS und die zu ihm bezüglich der Peripherietechnik der Betriebstechnik der Sicherheitstechnik und der Vermittlungstechnik gehörenden Programme abgespeichert.

Im Speicherteil RAM ist als Teileinheit der Datenbasis der Speicherbereich KD angedeutet. In diesem sind die Kundendaten, wie z.B. die den einzelnen Fernsprechendgeräten FE1 bis FEx zugeteilten Berechtigungen und die Systemkonfiguration abgelegt. Der Speicherteil RAM dient u.a. der Aufnahme von temporären Daten zur Programmablaufsteuerung. Es werden in ihm auch Daten übernommen, die während eines durch ein Kommunikationsendgerät initiierten Verbindungsaufbaus oder bei der Inanspruchnahme eines Dienstes bzw. eines Leistungsmerkmals abgefragt werden. Im Zusammenhang mit der erfindungsgemäßen Lösung ist ein Speicherbereich SP-F angedeutet, in dem grundsätzlich eine Faksimile-Seite nach ihrer systemseitigen Zusammenstellung abgelegt werden soll. Der Speicherbereich GL enthält beispielsweise die im Zusammenhang mit der Gebührenerfassung, bzw. Gesprächsdatenerfassung zusammengestellte Liste von Informationen, die nach ganz bestimmten für sich bekannten Gesichtspunkten sortiert sein kann. Erfindungsgemäß soll nun das beispielhaft ein analoges Faksimile-Endgerät darstellende Endgerät FAX nicht nur dazu dienen, die von einem anderen Faksimile-Endgerät ausgesendeten Fax-Nachrichten zu empfangen bzw. solche Fax-Nachrichten in der bekannten Weise auszusenden, sondern es sollen damit auch systemintern gebildete Dateninformationen ausgedruckt werden. Solche Informationen werden üblicherweise durch einen an das System über eine entsprechende Schnittstelle angeschlossenen Drucker visualisiert. Wird diese Aufgabe zusätzlich von dem sowieso vorhandenen Faksimile-Endgerät übernommen, so kann dadurch der Drucker eingespart werden. Das ist besonders vorteilhaft, da ein ausschließlich für die Darstellung solche intern gebildeten Informationen vorhandener Drucker keine besondere Auslastung hat. Die Aufgaben dieses Druckers übernimmt erfindungsgemäß das sowieso angeschlossene Faksimile-Endgerät.

Bei Einsatz eines analogen Faksimile-Endgerätes wird bei der erfindungsgemäßen Lösung ein Faksimile-Modem FM an eine in der Regel bereits im System vorgeleistete Standardisierte Schnittstelle, z. B. eine V24-Schnittstelle und über eine a/b-Teilnehmerschnittstelle angeschaltet. In Systemen, in denen bereits zur Fernwartung ein Faksimile-Modem angeschlossen ist, kann dieses ggf. mitbenutzt werden. Damit würde auch die zugehörige V24-Schnittstelle entfallen. Die Implementierung der erfindungsgemäßen Lösung erfolgt in der Software in Form eines Protokolls für das Faksimile-Modem und in Form einer Ausgabesteuerung für das Faksimile-Endgerät. Ersteres ist durch das im Speicherbereich PROM angedeutete Modul PM und letzteres durch das Modul PF realisiert. Die systeminternen Informationen, die zusätzlich durch das Faksimile-Endgerät ausgedruckt werden sollen, werden durch die Steuerung in fax-druckbare Zeichen codiert und zum Zeitpunkt der Weiterleitung an die V24-Schnittstelle übergeben. Über diese Schnittstelle und die entsprechende Leitung werden sie grundsätzlich als vollständige Druckseite zum Fax-Modem FM übertragen. Dieses Fax-Modem bewirkt die Leitungscodierung und die Protokollabwicklung mit dem Faksimile-Endgerät. Durch die Leitungscodierung wird bewirkt, daß nach der damit verbundenen Umsetzung eines Datenstromes eine Signalfolge entsteht, die auf der Anschlußleitung zu dem jeweiligen Empfänger, d. h. zu dem Faksimile-Endgerät FAX übertragen werden kann. Diese Übertragung kann erfolgen, nachdem das Faksimile-Modem und das Faksimile-Endgerät durch die Systemsteuerung vermittelt wurde. Die durch das Faksimile-Endgerät FAX auszudruckenden Informationen werden z. B. in einem ganz bestimmten Codier-Standard als serieller Graphik-Strom übertragen. Dieser enthält die Schwarz/Grau/Weiß-Informationen der Druckmatrix. Die zugrundeliegenden Daten sind in geeigneter Weise komprimiert.

Solche zusätzlich von dem bereits vorhandenen Faksimile-Endgerät auszudruckenden Daten sind beispielsweise Gesprächs- und/oder Gebührendaten. Der jeweilige Inhalt des Gebührenausdrucks kann durch die Programmierung festgelegt werden. Dieser Ausdruck ist in unterschiedlichster Weise zu strukturieren. Dies erfolgt durch die Mitwirkung eines Gebührenverarbeitungsmoduls GM. Im Zusammenhang mit einem Betriebstechnikmodul BTM, das durch betriebstechnische Eingaben aufrufbar ist, können z. B. die auszudruckenden Informationen in Verbindung mit dem Modul GM verwaltet und editiert werden. Das bereits in sehr vielen Kommunikationssystem angeschlossene Faksimile-Endgerät kann also den Druck der Gesprächs- und/oder Gebührendaten mitübernehmen. Dieser Ausdruck kann auf eine entsprechende Anforderung hin oder mit Erreichen einer fest einprogrammierten Situation vorgenommen werden.

Die FIG 2 zeigt eine gegenüber der FIG 1 weiter reduzierte Darstellung des Kommunikationssystems. Es sind damit die bereits bezüglich der FIG 1 beschriebenen Funktionen möglich. Der wesentliche Unterschied besteht darin, daß das Faksimile-Modem in der Anlage integriert ist. Dies ist durch die Einheit IFM angedeutet. Unter der Voraussetzung eines analogen Faksimile-Endgerätes FAX wird unter Einbeziehung dieses Modems die fax-gerechte Übertragung der Informationen über den. eingestellten Koppelweg und die Anschlußleitung vorgenommen. In dieser FIG 2 ist noch angedeutet, daß die bei einer gebührenpflichtigen Verbindung vom öffentlichen System übermittelten Gebühreninformationen als separate Gebührenimpulse (ÖN-HKZ) bzw. als Dateninformation auf dem Signalisierungskanal (ÖN-ISDN) übermittelbar sind. Diese übermittelten Informationen werden in gleicher Weise wie für die FIG 1 erläutert für das Faksimile-Endgerät in geeigneter Weise codiert und für den Modus, in dem es jeweils betrieben wird, aufbereitet. Die jeweiligen Gesprächs- und/oder Gebührendaten werden also in gleicher Weise jeweils in fax-druckbare Zeichen umgesetzt, zu Fax-Druckseiten gruppiert und über das integrierte Fax-Modem zum Ausdruck der betreffenden Daten auf das Faksimile-Endgerät FAX vermittelt.

## Patentansprüche

1. Kommunikationssystem, insbesondere ein privates Kommunikationssystem mit einer Mehrzahl von Teilnehmeranschlußschaltungen, an die Endgeräte unterschiedlicher Art anschließbar sind und wobei mindestens ein solches Endgerät als Faksimile-Endgerät ausgebildet ist und das Kommunikationssystem einen Systemspeicher zur Speicherung von Programmodulen und von Dateninformationen und wenigstens einen Systemprozessor mit einem Betriebssystem zur Abarbeitung der Programmodule aufweist und die einzelnen Funktionskomponenten bzw. Schnittstellen des Kommunikationssystems an ein internes Bus-System angeschlossen sind,
**dadurch gekennzeichnet**,
daß zusätzlich zu den originär für das Faksimile-Gerät bestimmten Informationen, die von einem anderen gleichartigen Gerät geliefert werden auch andere durch die Systemsteuerung im Zusammenhang mit dem Betrieb des Systems oder mit einer andersartigen Kommunikationsverbindung ermittelte Dateninformationen nach der entsprechenden Umsetzung in ein Faksimile-Format zum geeigneten Zeitpunkt nach der vorab durch das System vorgenommenen Vermittlung auf das Faksimile-Gerät zu diesem übertragen und dort gleichfalls ausgedruckt werden.

2. Kommunikationssystem nach Anspruch 1,
**dadurch gekennzeichnet**,
daß in den Fällen in denen die durch die programmgesteuerte Umsetzung im Faksimile-Format vorliegenden Informationen nicht unmittelbar verarbeitbar sind, diese einem Faksimile-Modem zugeführt werden, das daraus unter anderem bestimmungsgemäß die zur Übertragung an das Faksimile-Gerät bestimmten leitungscodierten Informationen bildet.

3. Kommunikationssystem nach Anspruch 1 oder 2,
**dadurch gekennzeichnet**,
daß zumindest das Faksimile-Modem als eine extern an das Kommunikationssystem anzuschließende Einheit ausgebildet ist, die sowohl über eine Administrationsschnittstelle (z. B. standardisierte V24-Schnittstelle) als auch über eine Teilnehmerleitungsschnittstelle (Fernsprechendgerät-Anschlußschaltung) angeschlossen ist.

4. Kommunikationssystem nach Anspruch 1 oder 2,
**dadurch gekennzeichnet**,
daß die für die Funktionsschritte, einschließlich der Bildung der leitungscodierten Information notwendigen Komponenten vollständig im System integriert sind und die intern gebildeten faksimile-gerechten Informationen dem über eine Teilnehmerschnittstelle angeschlossenen Faksimile-Gerät unmittelbar zugeführt werden.

5. Kommunikationssystem nach Anspruch 1,
**dadurch gekennzeichnet**,
daß die im Zusammenhang mit einer Kommunikationsverbindung im System ermittelten Informationen, solche Informationen darstellen, die die bei einer gebührenpflichtigen Kommunikationsverbindung erfaßten und ggf. nach unterschiedlichen Kriterien aufbereiteten Gebühren- und/oder Gesprächsdaten betreffen.
